# EUROPEAN PATENT SPECIFICATION

(11) **EP 4 030 042 B1**
(45) Date of publication and mention of the grant of the patent: **21.05.2025**
(21) Application number: 21191035.1
(22) Date of filing: 12.08.2021
(51) Int. Cl.: F02B 29/04, F28D 1/04, F28D 7/00, F01P 3/18, F01P 3/12, F28D 21/00

(54) **RADIATOR-INTERCOOLER INTEGRATED MODULE AND VEHICLE INCLUDING THE SAME**
INTEGRIERTES MODUL MIT KÜHLER UND ZWISCHENKÜHLER UND FAHRZEUG MIT DIESEM MODUL
MODULE INTÉGRÉ RADIATEUR-REFROIDISSEUR INTERMÉDIAIRE ET VÉHICULE LE COMPRENANT

(30) Priority: 18.01.2021 KR 20210006722
(43) Date of publication of application: 20.07.2022
(73) Proprietor: Hyundai Motor Company, Seoul 06797 (KR); Kia Corporation, Seocho-gu Seoul 06797 (KR)
(72) Inventor: KANG, Seung Jae, 18280 Hwaseong-si, Gyeonggi-do (KR); CHOI, Won Rok, 18280 Hwaseong-si, Gyeonggi-do (KR); PARK, Hyun Jin, 18280 Hwaseong-si, Gyeonggi-do (KR)
(74) Representative: Viering, Jentschura & Partner mbB Patent- und Rechtsanwälte

(56) References cited:
- EP-A1- 0 545 842
- EP-A1- 0 703 424
- KR-A- 19980 038 566
- US-A1- 2017 335 747

## Description

### BACKGROUND

### (a) Technical Field

The present disclosure relates to a radiator-intercooler integrated module and a vehicle including the same, and more particularly, to a radiator-intercooler integrated module into which a low-temperature radiator and a water cooled intercooler of a vehicle are integrated.

### (b) Background Art

A vehicle in which a turbocharger is mounted is equipped with an intercooler for cooling heat generated by charging air. The intercooler is classified into an air cooled intercooler that cools charged air using air supplied during driving and a water cooled intercooler that cools the charged air using a coolant.

Recently, there has been a tendency to adopt the water cooled intercooler. Considerate change in an engine system is required to mount the water cooled intercooler on an engine. For example, an overall change in the front region of the vehicle is required to additionally mount a low-temperature radiator through which a coolant for heat exchange with the charged air flows. Further, in case of the water cooled intercooler, a number of components are added in comparison with the air cooled intercooler. At least for these reasons, the water cooled intercooler has a complicated structure, and a layout configuration of the components of the water cooled intercooler becomes difficult.

US 2017/335747 A1 describes a radiator-intercooler integrated module according to the preamble of claim 1.

EP0545842 A1 discloses a combination of an air-cooled intercooler and a liquid-cooled intercooler.

EP 0 703 424 A1 and KR 1998 0038566 A each describe a water cooled intercooler.

### SUMMARY

The present disclosure has been made in an effort to solve the above-described problems associated with prior art. In one aspect, the present disclosure provides a radiator-intercooler integrated module capable of simplifying a structure thereof, and simplifying layout design of a front region of a vehicle for a water cooled intercooler.

Objectives of the present disclosure are not limited to the above-described objectives, and other objectives of the present disclosure, which are not mentioned, can be clearly understood from the following description by those having ordinary skill in the art which the present disclosure pertains. The features of the present disclosure for achieving the above objectives of the present disclosure and performing the following characteristic functions of the present disclosure, which will be described later, are as follows.

According to the present invention, this is achieved by a radiator-intercooler integrated module according to the features of claim 1 and a vehicle according to the features of claim 6. Further advantageous embodiments are described in the subclaims.

According to the present disclosure, it is possible to provide a radiator-intercooler integrated module capable of simplifying layout design of a front region of a vehicle even if a water cooled intercooler instead of an air cooled intercooler is applied to cool supercharged air. Effects of the present disclosure are not limited to the above-mentioned effects. Other unmentioned effects can be clearly recognized from the following description by those having ordinary skill in the art.

### BRIEF DESCRIPTION OF THE DRAWINGS

The above and other features of the present disclosure will now be described in detail with reference to exemplary embodiments thereof illustrated in the accompanying drawings which are given hereinbelow by way of illustration only, and thus are not limitative of the present disclosure, and wherein:
FIG. 1 is a side view illustrating a radiator-intercooler integrated module according to an embodiment of the present disclosure;
FIG. 2A is a perspective view illustrating a low-temperature radiator of the radiator-intercooler integrated module according to an embodiment of the present disclosure;
FIG. 2B is a perspective view illustrating a radiator-intercooler integrated module according to another embodiment of the present disclosure;
FIG. 3 is a view illustrating a state in which a part of the low-temperature radiator of the radiator-intercooler integrated module according to the embodiment of the present disclosure is removed;
FIG. 4 is a view illustrating an intercooler of the radiator-intercooler integrated module according to the embodiment of the present disclosure;
FIG. 5A is a sectional view taken along line A-A' of FIG. 3 and illustrating the case where an exit tank is disposed on an upper side of a radiator core;
FIG. 5B is a sectional view taken in the same direction as in FIG. 5A and illustrating the case where the exit tank is disposed on a lower side of a radiator;
FIG. 6 is a general scheme illustrating a layout of a general front region of a vehicle; and
FIG. 7 is a view schematically illustrating a layout of a front region of a vehicle in which the radiator-intercooler integrated module according to the embodiment of the present disclosure is mounted.

### DETAILED DESCRIPTION

Hereinafter, exemplary embodiments of the present disclosure will be described in detail with reference to the accompanying drawings. Specific structures or functions described in the embodiments of the present disclosure are merely for illustrative purposes. Embodiments according to the concept of the present disclosure may be implemented in various forms, and it should be understood that they should not be construed as being limited to the embodiments described in the present specification, but include all of modifications included in the scope of the appended claims.

It will be understood that, although the terms "first," "second," etc. may be used herein to describe various elements, these elements should not be limited by these terms. These terms are only used to distinguish one element from another element. For instance, a first element discussed below could be termed a second element without departing from the teachings of the present invention. Similarly, the second element could also be termed the first element.

It will be understood that when an element is referred to as being "coupled" or "connected" to another element, it can be directly coupled or connected to the other element or intervening elements may be present therebetween. In contrast, it should be understood that when an element is referred to as being "directly coupled" or "directly connected" to another element, there are no intervening elements present. Other expressions that explain the relationship between elements, such as "between," "directly between," "adjacent to," or "directly adjacent to," should be construed in the same way.

Like reference numerals denote like components throughout the specification. In the meantime, the terminology used herein is for the purpose of describing particular embodiments only and is not intended to be limiting. As used herein, the singular forms "a," "an," and "the" are intended to include the plural forms as well, unless the context clearly indicates otherwise. It will be further understood that the terms "comprise," "include," "have," etc., when used in this specification, specify the presence of stated components, steps, operations, and/or elements, but do not preclude the presence or addition of one or more other components, steps, operations, and/or elements thereof.

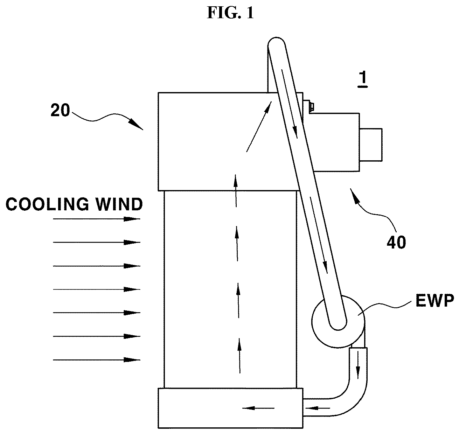

Hereinafter, the present disclosure will be described in detail with reference to the accompanying drawings. As illustrated in FIG. 1, a radiator-intercooler integrated module 1 according to the present invention includes a low-temperature radiator 20 and a water cooled intercooler 40. The low-temperature radiator 20 and the water cooled intercooler 40 are integrated as a single assembly.

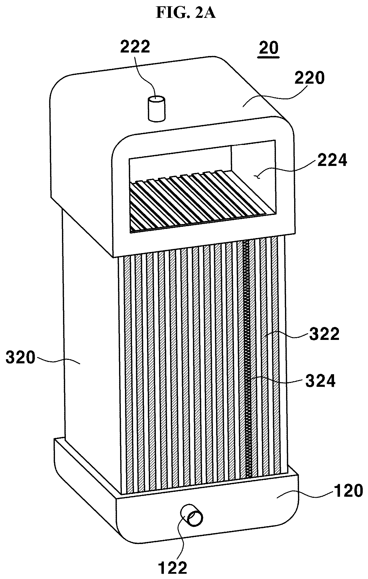

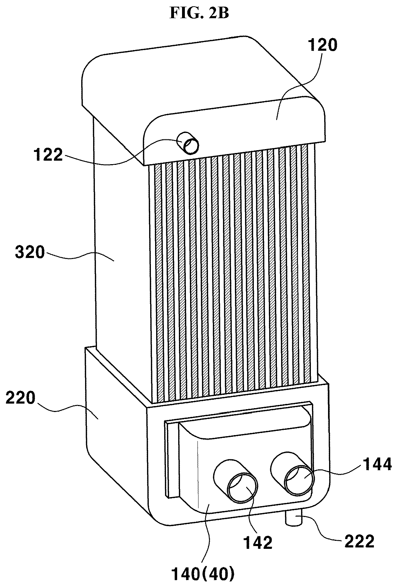

Referring to FIGS. 2A and 2B, the low-temperature radiator 20 includes an inlet tank 120, an exit tank 220, and a radiator core 320. The inlet tank 120 and the exit tank 220 are disposed at each side of the radiator core 320. According to an exemplary embodiment of the present disclosure, as illustrated in FIG. 2A, when the radiator-intercooler integrated module according to the present disclosure is mounted in a vehicle, the inlet tank 120 is disposed below the radiator core 320, and the exit tank 220 is disposed above the radiator core 320. According to another exemplary embodiment of the present disclosure, as illustrated in FIG. 2B, when the radiator-intercooler integrated module according to the present disclosure is mounted in a vehicle, the exit tank 220 is disposed below the radiator core 320, and the inlet tank 120 is disposed above the radiator core 320. Hereinafter, the present invention is described based on which the inlet tank 120 is disposed below the radiator core 320. However, as described above, the positions of the inlet tank 120 and the exit tank 220 may be changed.

The inlet tank 120 may include a water inlet 122. The water inlet 122 may be supplied with a coolant from a coolant supply source or an electric water pump (EWP). The radiator core 320 may be disposed above the inlet tank 120. On the contrary, as described above, when the exit tank 220 is disposed below the radiator core 320 and the inlet tank 120 is disposed above the radiator core 320, the radiator core 320 may be disposed below the inlet tank 120. The radiator core 320 may include coolant pipelines 322 along which a coolant flows. The coolant of the inlet tank 120 which is introduced from the water inlet 122 flows through the radiator core 320. Heat exchange between cooling wind passing the radiator core 320 and the coolant passing the coolant pipelines 322 occurs at the radiator core 320. A plurality of radiator cooling fins 324 may be provided to the radiator core 320 along the coolant pipelines 322 and promote cooling of the coolant while the cooling wind passes the radiator cooling fins 324.

The exit tank 220 may be disposed above the radiator core 320. On the contrary, as described above, when the inlet tank 120 is disposed above the radiator core 320, the exit tank 220 may be disposed below the radiator core 320. The coolant cooled while passing the radiator core 320 may be introduced into the exit tank 220. The exit tank 220 may be equipped with a water outlet 222. The coolant passing the exit tank 220 may be discharged to the outside of the radiator-intercooler integrated module 1 through the water outlet 222. The coolant recirculates around the radiator-intercooler integrated module 1 through the electric water pump (EWP). The exit tank 220 may include an opening 224 that passes through a part of the exit tank 220. A holding space S is provided inside the exit tank 220.

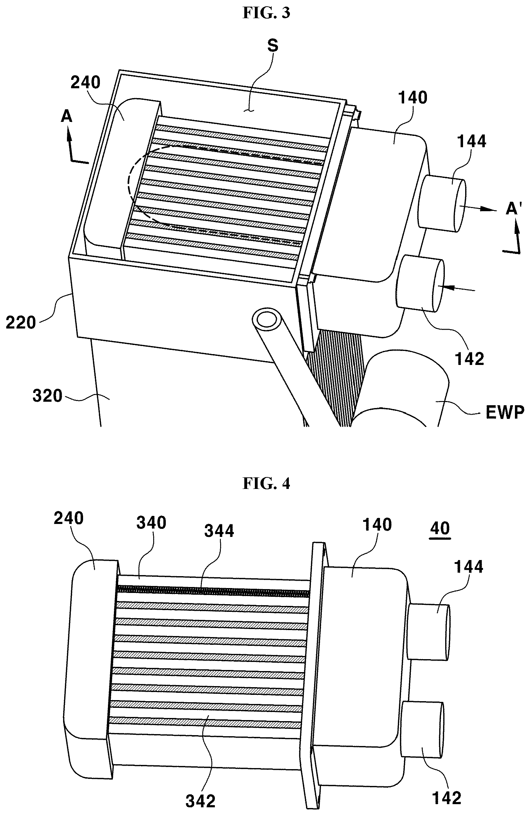

As illustrated in FIGS. 3 and 4, the water cooled intercooler 40 is integrated into the low-temperature radiator 20. In particular, the water cooled intercooler 40 is mounted on the exit tank 220 and is received in the holding space S. The water cooled intercooler 40 may include a first tank 140, a second tank 240, and a cooling core 340. The first tank 140 and the second tank 240 may be disposed at each side of the cooling core 340. The first tank 140 may have an air inlet 142 and an air outlet 144. Compressed air of a turbocharger may be introduced into the air inlet 142. The air flowing into the outlet tank 220 through the air inlet 142 may be discharged through the air outlet 144. According to an exemplary embodiment of the present disclosure, the first tank 140 may protrude from the exit tank 220 and, more particularly, may protrude from the opening 224.

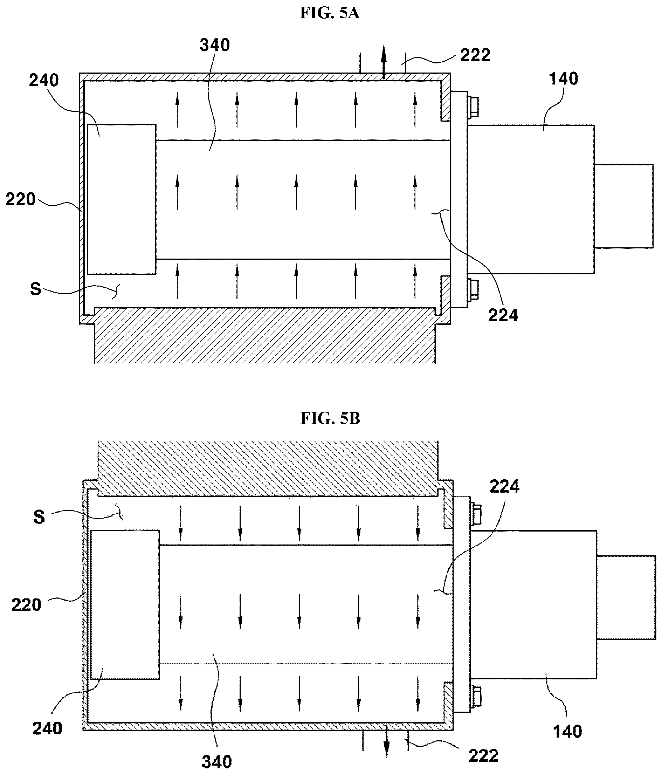

Air introduced into the first tank 140 passes the cooling core 340. As indicated by an arrow and a dotted line of FIG. 3, the compressed air supplied through the turbocharger is introduced into the first tank 140 through the air inlet 142, cooled through the cooling core 340, and then discharged through the air outlet 144 of the first tank 140. The cooling core 340 may include air pipelines 342 through which the compressed air introduced into the first tank 140 may flow. As illustrated in FIG. 5A, the compressed air passing the air pipelines 342 is configured to exchange heat with the coolant passing the radiator core 320 and then flow in the outlet tank 220 from the radiator core 320, thereby reducing a temperature thereof. Arrows of FIG. 5A indicate a flow direction of the coolant.

In other words, the coolant inside the low-temperature radiator 20 may be cooled by the cooling wind. The coolant cooled in this way cools the compressed air introduced into the cooling core 340 in the exit tank 220 while passing the water cooled intercooler 40. Meanwhile, FIG. 5A illustrates a case where the exit tank 220 is disposed above the radiator core 320 and the coolant moves up from bottom to top. On the contrary, FIG. 5B illustrates a flow direction of the coolant that moves down from top to bottom when the exit tank 220 is disposed below the radiator core 320.

According to an exemplary embodiment of the present disclosure, a plurality of intercooler cooling fins 344 are provided along the air pipelines 342. The intercooler cooling fins 344 enables a coolant to more effectively cool air inside the air pipelines 342 while the coolant passes by the air pipelines 342. The compressed air passing the air pipelines 342 may pass the second tank 240, pass the air pipelines 342 again, and return to the first tank 140. The cooled compressed air returning to the first tank 140 exits through the air outlet 144 and is supplied to an intake manifold 610.

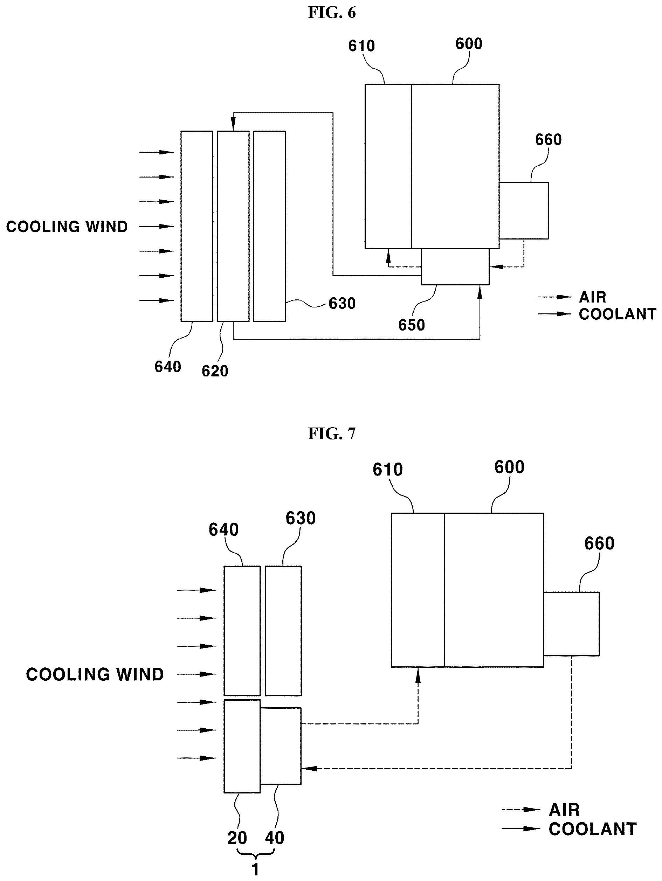

FIG. 6 illustrates an exemplary front region of a vehicle in which a water cooled intercooler is mounted, and FIG. 7 illustrates a front region of a vehicle in which the radiator-intercooler integrated module according to the present disclosure is mounted. As illustrated in FIG. 6, a heat exchanger including a radiator and a condenser is generally disposed in front of an engine 600 and an intake manifold 610 of a vehicle. In the vehicle to which the water cooled intercooler is applied, a low-temperature radiator 620 is typically disposed in front of a high-temperature radiator 630 disposed in the front region of a vehicle, and is disposed between a condenser 640 and the high-temperature radiator 630. The high-temperature radiator 630 is configured to cool an engine coolant, and the low-temperature radiator 620 is configured to cool a coolant of a water cooled intercooler 650.

Charged air passing a turbocharger 660 may be cooled while passing the water cooled intercooler 650 and is delivered to the intake manifold 610. The cooling of the charged air may be performed at the low-temperature radiator 620 and by the coolant circulating through the water cooled intercooler 650. In contrast, in the present disclosure illustrated in FIG. 7, the low-temperature radiator 20 is juxtaposed with the condenser 640. Accordingly, the low-temperature radiator 20 may be cooled without a loss of cooling wind, and thus a size of the low-temperature radiator 20 may be reduced.

Further, since the water cooled intercooler 40 is integrated into the low-temperature radiator 20, a structure of the radiator-intercooler integrated module may be simplified, and thus an effect of reducing an overall cost may be achieved. According to the present disclosure, the low-temperature radiator 20 and the water cooled intercooler 40 are mounted at a position where the air cooled intercooler is disposed in the related art. Accordingly, there is no need to change the layout or the engine structure of the vehicle, thereby reducing investment expenses.

To satisfy the increasingly stricter emission control limits, there is a need to expand a usable range of low-pressure exhaust gas recirculation (LPEGR). The air cooled intercooler has a limitation due to a low-temperature freezing problem, whereas the water cooled intercooler may enable expansion of the usable range of the LPEGR in that cooling efficiency can be controlled using the electric water pump and without the freezing problem. According to the present disclosure, the radiator-intercooler integrated module may be mounted at the same position as the conventional air cooled intercooler is mounted, while applying the water cooled intercooler, thereby solving a problem with mounting of the water cooled intercooler.

## Claims

1. A radiator-intercooler integrated module, comprising:
a low-temperature radiator (20);
wherein the low-temperature radiator (20) includes:
an inlet tank (120) into which a water-based coolant flows;
a radiator core (320) disposing the coolant in heat exchange relationship with air, wherein the coolant from the inlet tank (120) flows into the radiator core (320); and
an exit tank (220), wherein the coolant passing through the radiator core (320) flows into the exit tank (220),
wherein the inlet tank (120) and the exit tank (220) are disposed at opposite ends with respect to the radiator core (320), respectively,
**characterised in that** the radiator-intercooler integrated module comprises a water-cooled intercooler (40) formed integrally with the low-temperature radiator (20) into a single body.

2. The radiator-intercooler integrated module of claim 1, wherein the water cooled intercooler (40) is inserted and disposed in the exit tank (220).

3. The radiator-intercooler integrated module of claim 2, wherein the exit tank (220) includes:
an opening (224) formed by opening a part of the exit tank (220); and
a holding space (S) forming an empty space inside the opening (224).

4. The radiator-intercooler integrated module of claim 3, wherein the water cooled intercooler (40) is seated in the holding space (S), and a portion of the water cooled intercooler (40) protrudes through the opening (224).

5. The radiator-intercooler integrated module of one of claims 2-4, wherein a plurality of radiator cooling fins (324) are formed along the radiator core (320).

6. A vehicle comprising:
a turbocharger (660) configured to charge air;
a radiator-intercooler integrated module (1) according to any of claims 1-5 having a water cooled intercooler (40) configured to receive the charged air from the turbocharger (660) and a low-temperature radiator (20) formed integrally with the water cooled intercooler (40), wherein a coolant that exchanges heat with air circulates the low-temperature radiator (20); and
an intake manifold (610) configured to receive the heat-exchanged air discharged from the radiator-intercooler integrated module (1).

7. The vehicle of claim 6, wherein the radiator-intercooler integrated module (1) is juxtaposed with a condenser (640) disposed in the front of the vehicle in a width direction of the vehicle.

## Patentansprüche

1. Integriertes Kühler-Ladeluftkühler-Modul, aufweisend:
einen Niedertemperaturkühler (20),
wobei der Niedertemperaturkühler (20) aufweist:
einen Einlassbehälter (120), in den ein wasserbasiertes Kühlmittel fließt,
einen Kühlerkern (320), der das Kühlmittel in Wärmetauschbeziehung mit Luft anordnet, wobei das Kühlmittel aus dem Einlassbehälter (120) in den Kühlerkern (320) fließt, und
einen Auslassbehälter (220), wobei das durch den Kühlerkern (320) fließende Kühlmittel in den Auslassbehälter (220) fließt,
wobei der Einlassbehälter (120) und der Auslassbehälter (220) in Bezug auf den Kühlerkern (320) jeweils an entgegengesetzten Enden angeordnet sind,
**dadurch gekennzeichnet, dass** das integrierte Kühler-Ladeluftkühler-Modul einen wassergekühlten Ladeluftkühler (40) aufweist, der integral mit dem Niedertemperaturkühler (20) zu einem einzigen Körper ausgebildet ist.

2. Integriertes Kühler-Ladeluftkühler-Modul gemäß Anspruch 1, wobei der wassergekühlte Ladeluftkühler (40) in den Auslassbehälter (220) eingesetzt und darin angeordnet ist.

3. Integriertes Kühler-Ladeluftkühler-Modul gemäß Anspruch 2, wobei der Auslassbehälter (220) aufweist:
eine Öffnung (224), die durch Öffnen eines Teils des Auslassbehälters (220) ausgebildet ist, und
einen Aufnahmeraum (S), der einen leeren Raum innerhalb der Öffnung (224) bildet.

4. Integriertes Kühler-Ladeluftkühler-Modul gemäß Anspruch 3, wobei der wassergekühlte Ladeluftkühler (40) in den Aufnahmeraum (S) gesetzt ist und ein Abschnitt des wassergekühlten Ladeluftkühlers (40) durch die Öffnung (224) hindurch hervorsteht.

5. Integriertes Kühler-Ladeluftkühler-Modul gemäß einem der Ansprüche 2 bis 4, wobei eine Mehrzahl von Kühlerkühlrippen (324) entlang des Kühlerkerns (320) ausgebildet ist.

6. Fahrzeug, aufweisend:
einen Turbolader (660), der konfiguriert ist, um Luft zu laden,
ein integriertes Kühler-Ladeluftkühler-Modul (1) gemäß irgendeinem der Ansprüche 1 bis 5, aufweisend einen wassergekühlten Ladeluftkühler (40), der konfiguriert ist, um die Ladeluft von dem Turbolader (660) zu empfangen, und einen Niedertemperaturkühler (20), der integral mit dem wassergekühlten Ladeluftkühler (40) ausgebildet ist, wobei ein Kühlmittel, das Wärme mit Luft austauscht, in dem Niedertemperaturkühler (20) zirkuliert, und
einen Ansaugkrümmer (610), der konfiguriert ist, um die aus dem integrierten Kühler-Ladeluftkühler-Modul (1) abgegebene Wärmetauschluft aufzunehmen.

7. Fahrzeug gemäß Anspruch 6, wobei das integrierte Kühler-Ladeluftkühler-Modul (1) neben einem Kondensator (640) angeordnet ist, der in einer Breitenrichtung des Fahrzeugs in der Front des Fahrzeugs angeordnet ist.

## Revendications

1. Module intégré radiateur-refroidisseur intermédiaire, comprenant :
un radiateur basse température (20) ;
dans lequel le radiateur basse température (20) comprend :
un réservoir d'entrée (120) dans lequel s'écoule un liquide de refroidissement à base d'eau ;
un noyau de radiateur (320) disposant le liquide de refroidissement en relation d'échange thermique avec de l'air, dans lequel le liquide de refroidissement provenant du réservoir d'entrée (120) s'écoule dans le noyau de radiateur (320) ; et
un réservoir de sortie (220), dans lequel le liquide de refroidissement passant à travers le noyau de radiateur (320) s'écoule dans le réservoir de sortie (220),
dans lequel le réservoir d'entrée (120) et le réservoir de sortie (220) sont disposés respectivement à des extrémités opposées par rapport au noyau de radiateur (320),
**caractérisé en ce que** le module intégré radiateur-refroidisseur intermédiaire comprend un refroidisseur intermédiaire refroidi à l'eau (40) formé intégralement avec le radiateur basse température (20) en un seul corps.

2. Module intégré radiateur-refroidisseur intermédiaire selon la revendication 1, dans lequel le refroidisseur intermédiaire refroidi à l'eau (40) est inséré et disposé dans le réservoir de sortie (220).

3. Module intégré radiateur-refroidisseur intermédiaire selon la revendication 2, dans lequel le réservoir de sortie (220) comprend :
une ouverture (224) formée en ouvrant une partie du réservoir de sortie (220) ; et
un espace de retenue (S) formant un espace vide à l'intérieur de l'ouverture (224).

4. Module intégré radiateur-refroidisseur intermédiaire selon la revendication 3, dans lequel le refroidisseur intermédiaire refroidi à l'eau (40) est logé dans l'espace de retenue (S), et une partie du refroidisseur intermédiaire refroidi à l'eau (40) fait saillie à travers l'ouverture (224).

5. Module intégré radiateur-refroidisseur intermédiaire selon l'une des revendications 2 à 4, dans lequel une pluralité d'ailettes de refroidissement de radiateur (324) sont formées le long du noyau de radiateur (320).

6. Véhicule comprenant :
un turbocompresseur (660) configuré pour charger de l'air ;
un module intégré radiateur-refroidisseur intermédiaire (1) selon l'une quelconque des revendications 1 à 5 ayant un refroidisseur intermédiaire refroidi à l'eau (40) configuré pour recevoir l'air chargé provenant du turbocompresseur (660) et un radiateur basse température (20) formé intégralement avec le refroidisseur intermédiaire refroidi à l'eau (40), dans lequel un liquide de refroidissement qui échange de la chaleur avec de l'air circule dans le radiateur basse température (20) ; et
un collecteur d'admission (610) configuré pour recevoir l'air échangé thermiquement évacué du module intégré radiateur-refroidisseur intermédiaire (1).

7. Véhicule selon la revendication 6, dans lequel le module intégré radiateur-refroidisseur intermédiaire (1) est juxtaposé à un condenseur (640) disposé à l'avant du véhicule dans un sens de largeur du véhicule.
